# EUROPÄISCHE PATENTSCHRIFT

(11) **EP 4 092 345 B1**
(45) Veröffentlichungstag und Bekanntmachung des Hinweises auf die Patenterteilung: **01.01.2025**
(21) Anmeldenummer: 22166974.0
(22) Anmeldetag: 06.04.2022
(51) Int. Cl.: F24F 13/02, F24F 13/24, G10K 11/16

(54) **SCHALLDÄMPFER ZUM MONTIEREN IN EINEM LUFTKANAL**
SILENCER FOR MOUNTING IN AN AIR DUCT
SILENCIEUX À MONTER DANS UN CANAL D'AIR

(30) Priorität: 21.05.2021 DE 102021113240
(43) Veröffentlichungstag der Anmeldung: 23.11.2022
(73) Patentinhaber: Naber Holding GmbH & Co. KG, 48529 Nordhorn (DE)
(72) Erfinder: Naber, Hans-Joachim, 48527 Nordhorn (DE)
(74) Vertreter: Angerhausen, Christoph

(56) Entgegenhaltungen:
- EP-B1- 0 495 763
- EP-B1- 2 252 836
- JP-A- 2020 026 950
- KR-A- 20100 134 274
- KR-A- 20210 037 193
- US-A1- 2018 291 781

## Beschreibung

Die Erfindung geht aus von einem Schalldämpfer zum Montieren in einem Luftkanal, insbesondere in einem Flachkanal, mit zumindest einem sich im Wesentlichen in einer Längsrichtung erstreckenden schallabsorbierenden Dämmelement, sowie mit zumindest einer das Dämmelement zumindest abschnittsweise aufnehmenden Haltevorrichtung, welche eine Befestigungseinrichtung zum Fixieren des Schalldämpfers im Luftkanal aufweist. Ein derartiger Schalldämpfer ist bereits bekannt aus der Druckschrift US 2018 / 0 291 781 A1. Ein ähnlicher Schalldämpfer ist außerdem bekannt aus der Druckschrift KR 2021 0037193 A. Die Erfindung betrifft ferner eine Anordnung aus einem Luftkanal und einem Schalldämpfer.

Aus der ist DE 101 26 475 A1 ist ein Schalldämpfer zum Betrieb in einem Luftkanal eines Raumzonenbehandlungsgeräts bekannt, welcher zur Ermittlung des den Kanal durchströmenden Volumenstroms genutzt wird. Allerdings sind keine strukturellen Details offenbart, mittels deren der Schalldämpfer in einem Luftkanal zu montieren ist.

Es ist daher die Aufgabe der vorliegenden Erfindung, einen Schalldämpfer für einen Luftkanal bereitzustellen, welcher leicht zu montieren und variabel an unterschiedliche Einbausituationen anpassbar ist.

Die Aufgabe wird gelöst durch einen Luftkanal und eine Anordnung mit den Merkmalen der unabhängigen Ansprüche.

Demgemäß vorgesehen, dass die Haltevorrichtung zwei, insbesondere in einer Höhenrichtung des Schalldämpfers, lösbar miteinander verbundene Halbschalen aufweist, zwischen welchen das Dämmelement zumindest abschnittsweise aufgenommen und fixiert ist.

Ein Vorteil des erfindungsgemäßen Schalldämpfers besteht darin, dass dieser variabel an unterschiedliche räumliche Gegebenheiten anpassbar ist. Durch die lediglich örtlich, beispielsweise stirnseitig vorgesehenen Haltevorrichtungen kann der Schalldämpfer auf nahezu jede gewünschte Länge eingestellt und damit jeweils ein entsprechendes Dämmelement bzw. mehrere parallele Dämmelemente mit passender Länge verbaut werden.

Ein weiterer Vorteil ist darin zu sehen, dass durch eine standardisierte Anbindung zwischen Schalldämpfer und Luftkanal der Schalldämpfer besonders einfach ohne weitere Befestigungsmittel an nahezu jeder Stelle des Luftkanals montiert und gegebenenfalls auch nachträglich problemlos umpositioniert werden kann.

Der Schalldämpfer kann insbesondere ein Kulissenschalldämpfer sein. Das schallabsorbierende Dämmelement kann beispielsweise eine Dämmmatte sein. Der Schalldämpfer kann als Multiplex-Dämpfer ausgebildet sein. Dabei kann vorgesehen sein, dass der Schalldämpfer bzw. das zumindest eine Dämmelement unterschiedliche Mattenmaterialien aufweist. Das zumindest eine Dämmelement kann insbesondere zwischen zwei stirnseitig montierten Haltevorrichtungen fixiert sein. Die Befestigungseinrichtung kann so ausgebildet sein, dass der Schalldämpfer in Längsrichtung in einen vorgesehenen Luftkanal eingeschoben werden kann. Die Befestigungseinrichtung kann so ausgebildet sein, dass der Schalldämpfer nur in Längsrichtung des Luftkanals verschieblich ist. Die Befestigungseinrichtung kann ferner im eingebauten Zustand vorgespannt sein, sodass zum Verschieben des Schalldämpfers in Längsrichtung eine vorbestimmte Kraftschwelle überwunden werden muss. Es kann vorgesehen sein, dass ein Teilstück des Dämmelements nicht von der zumindest einen Haltevorrichtung umgeben oder aufgenommen ist. Das aus der Dämmelementaufnahme der zumindest einen Haltevorrichtung herausragende Stück kann somit offen liegend im Luftkanal montiert sein.

Es kann vorgesehen sein, dass der Schalldämpfer zumindest zwei Dämmelemente aufweist, welche aus unterschiedlichen schalldämmenden Materialien bestehen, welche zum Dämmen von Schall in unterschiedlichen Frequenzbereichen eingerichtet sind. Dadurch, dass Schall zumeist in einem sehr breiten Frequenzbereich emittiert wird, Ventilatoren bewegen sich beispielsweise in einem Bereich bis 1000Hz, einzelne Materialien jedoch nicht in der Lage sind, den gesamten relevanten Frequenzbereich ausreichend abzudecken, ist es vorteilhaft, zumindest zwei unterschiedliche Dämmmaterialien zu verwenden. Insbesondere vorteilhaft ist der Einsatz von geschäumten Materialien. Es ist denkbar, dass zumindest eines der Mattenmaterialien einen Melaminharzschaumstoff aufweist. Ferner kann vorgesehen sein, dass als weiteres geschäumtes Dämmmaterial Polyurethan, Polyether, Polyester oder duromerer Akustikschaum verwendet wird. Der Einsatz zweier oder mehrerer Materialien im Sinne des Multiplex-Dämpfers führt zu deutlich verbesserten Schalldämmeigenschaften über das gesamte relevante Frequenzband, so dass sich der Schalldämpfer insbesondere für den Bereich nichtindustrieller Anwendungen eignet, in welchen zunehmend auf Komfort, vorliegend im Sinne von geringen Lärmemissionen, Wert gelegt wird.

Es kann vorgesehen sein, dass die Haltevorrichtung zumindest eine an ihrem Außenumfang angeordnete, insbesondere sphärische oder linsenförmige, Aufdickung zum Erzeugen einer definierten Klemmkraft zwischen Schalldämpfer und Luftkanal aufweist. Dabei kann vorgesehen sein, dass die Befestigungseinrichtung nicht als Teil des Luftkanals, sondern als Element des Schalldämpfers ausgebildet ist. Bei dieser Ausführungsform führen die Aufdickungen bei Einschieben des Schalldämpfers in den Luftkanal zu einer definierten und vorbestimmbaren Klemmkraft zwischen Haltevorrichtung und Luftkanal.

Es kann vorgesehen sein, dass die Befestigungseinrichtung zumindest zwei in eine Querrichtung des Schalldämpfers auskragende hinterschnittige Rastabschnitte aufweist. Insbesondere kann die Befestigungseinrichtung mittig an einer Außenseite der Haltevorrichtung angeordnet sein. Es kann vorgesehen sein, dass die Befestigungseinrichtung an einer Ober-und/oder Unterseiten der Haltevorrichtung angeordnet ist. Es kann vorgesehen sein, dass die Rastabschnitte als hinterschnittige L-förmige Nuten in die Außenkontur der Haltevorrichtung eingebracht sind.

Ferner können die hinterschnittigen Rastabschnitte Teil zumindest einer in Längsrichtung auf dem Außenumfang der Haltevorrichtung angeordneten Führungsschiene sein. Die zumindest eine Führungsschiene kann in der Außenkontur der Haltevorrichtung versenkt sein. Die Führungsschiene kann insbesondere als in Längsrichtung verlaufende hinterschnittige L-förmige Nuten ausgebildet sein.

Die Halbschalen können eine in Querrichtung des Schalldämpfers liegende Trennebene aufweisen. Ferner können die Halbschalen als Gleichteile ausgebildet sein. Auf den gegenüberliegenden Trennebenen kann eine lösbare Verbindungseinrichtung ausgebildet sein. Die Verbindungseinrichtung kann eine Rasteinrichtung sein. Die aufeinander zuweisenden auf den Halbschalen angeordneten Elemente können, insbesondere in der Trennebene, fluchtend zueinander ausgeführt sein.

Es kann vorgesehen sein, dass die Außenkontur der miteinander verbundenen Halbschalen dem Strömungsquerschnitt des Luftkanals entspricht. Damit kann vorgesehen sein, dass die Außenkontur der Haltevorrichtung im montierten Zustand des Schalldämpfers im Luftkanal an der Innenkontur des Luftkanals anliegt. Damit können die miteinander verbundenen Halbschalen eine ringförmige Außengeometrie aufweisen.

Es kann ferner vorgesehen sein, dass die Halbschalen zumindest einen in Längsrichtung ausgerichteten Luftdurchlass umschließen. Die Geometrie des Luftdurchlasses kann dabei der Innenkontur der zusammengesetzten Halbschalen entsprechen. Es kann ferner vorgesehen sein, dass die Halbschalen mehrere in Längsrichtung ausgerichtete Luftdurchlässe umschließen. Jeder Luftdurchlass kann dabei in einen von jeweils zwei parallel seitlich benachbarten Dämmelementen gebildeten Luftdurchgang münden. Es kann ferner vorgesehen sein, dass zwischen den miteinander verbundenen Halbschalen zumindest ein den Strömungsquerschnitt senkrecht zur Längsrichtung durchquerender Steg ausgebildet ist, welcher eine in Längsrichtung, dem Dämmelement zugewandte, offene Dämmelementaufnahme aufweist, in welcher das Dämmelement stirnseitig aufgenommen ist. Insbesondere kann vorgesehen sein, dass je Haltevorrichtung eine Mehrzahl paralleler Stege, insbesondere drei Stege, vorgesehen sind. Dabei kann einer der Stege in Querrichtung gesehen mittig angeordnet und zwei Steg an den Außenseiten der Haltevorrichtung angeordnet sein. Dadurch kann der mittlere Steg zwei Luftdurchlässe mittig unterteilen. Die äußeren Stege begrenzen jeweils den diesen benachbarten Lufteinlass mit einer auf der Innenseite der Haltevorrichtung liegenden Luftleitfläche. Demgegenüber sind die Außenseiten der äußeren Stege durch die Außenkontur der Haltevorrichtung begrenzt.

Die Mehrzahl Stege ist durch im Wesentlichen in Querrichtung verlaufende, die Lufteinlässe begrenzende Halbschalenabschnitte verbunden. Die Dämmelementaufnahme kann durch eine sich in Längsrichtung in den Steg erstreckende Ausnehmung ausgebildet sein. Damit kann ein stirnseitiger Abschnitt des Dämmelements in die Dämmelementaufnahme eingesteckt und darin verankert werden. In der Trennebene der Halbschalen können die Stege des Unter- bzw. Oberteils jeweils aufeinander zuweisend ausgerichtete Oberflächen aufweisen. Auf den Oberflächen kann jeweils eine lösbare Verbindungseinrichtung zum Fügen der Halbschalen angeordnet sein. Es kann ferner vorgesehen sein, dass das Dämmelement sich in der dem Steg entsprechenden Richtung senkrecht zur Längsrichtung durch den Strömungsquerschnitt erstreckt. Die Dämmelementaufnahme kann sich in Höhenrichtung von der Unterseite bis zur Oberseite der Haltvorrichtung erstrecken. Entsprechend kann ein in der Haltevorrichtung aufgenommenes Dämmelement der Höhe des Stegs entsprechen. Im Falle eines Flachkanals kann sich das Dämmelement von einem Boden bis zu einer Decke des Kanals erstrecken.

Es kann ferner vorgesehen sein, dass der Steg so in der Haltevorrichtung angeordnet ist, dass dieser den Luftdurchlass mittig unterteilt. Es kann ferner vorgesehen sein, dass in der Dämmelementaufnahme ein Haltemittel zum Halten des Dämmelements vorgesehen ist. Dadurch können in Querrichtung links und rechts von dem Steg gleichförmige Luftdurchlässe ausgebildet sein.

Es kann ferner vorgesehen sein, dass das Haltemittel quer zur Längsrichtung ausgerichtete Haltezacken umfasst, auf welche das Dämmelement aufgesteckt ist. Die Haltezacken können insbesondere parallel zur Fügerichtung der Halbschalen ausgerichtet sein. Die Haltezacken können in Höhenrichtung des Schalldämpfers ausgerichtet sein.

Es kann ferner vorgesehen sein, dass die Dämmelementaufnahme das Dämmelement in Längsrichtung umgebende Luftleitflächen aufweist, welche das Dämmelement seitlich von dem zumindest einen Luftdurchlass abschirmen. Es kann vorgesehen sein, dass die Luftleitflächen sich von der Unterseite bis zur Oberseite der Haltevorrichtung erstrecken.

Es kann ferner vorgesehen sein, dass die Luftleitflächen auf der dem Dämmelement abgewandten Seite des Stegs den Steg in Längsrichtung verjüngend aufeinander treffen. Die dadurch spitz zulaufende Vorderseite des Stegs wirkt sich günstig auf den in die Haltevorrichtung einströmenden Luftstrom aus. Die an den Außenseiten angeordneten Stege können jeweils eine zur Innenseite der Haltevorrichtung weisende Luftleitfläche aufweisen. Diese kann den außen liegenden Steg auf der der jeweiligen Dämmelementaufnahme abgewandten Seite in Längsrichtung verjüngend in Richtung Außenkontur der Haltevorrichtung weggebogen sein.

Es kann ferner vorgesehen sein, dass die Haltevorrichtung eine Mehrzahl parallel voneinander beabstandeter Stege aufweist, in welchen eine entsprechende Mehrzahl parallel voneinander beabstandeter Dämmelemente aufgenommen sind. Beispielsweise kann die Haltevorrichtung drei Stege aufweisen, in deren Dämmelementaufnahmen jeweils ein Dämmelement aufgenommen sein kann. Die aufgenommenen Dämmelemente können eine im Wesentlichen quaderförmige Geometrie aufweisen. Die an den Außenseiten liegenden Dämmelemente können im Bereich der zumindest einen Haltevorrichtung zur Verbesserung des Luftstroms einen seitlich zurückspringenden Auslaufbereich aufweisen.

Es kann ferner vorgesehen sein, dass die gegenüberliegenden Stirnseiten des zumindest einen Dämmelements von zwei gegenüberliegenden Haltevorrichtungen gehalten sind, wobei die Dämmelementaufnahmen der Haltevorrichtungen aufeinander zuweisend ausgerichtet sind. Das zumindest eine Dämmelement kann so zwischen zwei gegenüberliegenden Haltevorrichtungen fixiert sein. Zwischen den Haltevorrichtungen kann der Schalldämpfer einen Abschnitt aufweisen, in welchem die Dämmelemente uneingespannt frei verlaufen. Die Luft strömt dadurch durch die Luftdurchlässe einer der Haltevorrichtungen in den Schalldämpfer ein und wird im Anschluss daran durch seitlich von je zwei Dämmelementen begrenzte Kanäle geleitet. Auf der gegenüberliegenden Seite strömt die Luft durch entsprechende Lufteinlässe der zweiten Haltevorrichtung wieder aus dem Schalldämpfer heraus.

Die Erfindung betrifft ferner eine Anordnung aus einem Luftkanal und einem Schalldämpfer nach einem der Ansprüche 1 bis 16, wobei der Schalldämpfer mittels der Befestigungseinrichtung im Luftkanal fixiert sein kann.

Es kann weiterhin vorgesehen sein, dass der Luftkanal eine zur Befestigungseinrichtung des Schalldämpfers komplementäre Befestigungseinrichtung aufweist. Beispielsweise kann sich der Luftkanal im Wesentlichen in einer Längsrichtung erstrecken, mit einer einen Strömungsquerschnitt umschließenden Kanalwand, welche an ihrer Innenseite eine Befestigungseinrichtung zum Befestigen des im Luftkanal aufnehmbaren Schalldämpfers aufweist.

Die Befestigungseinrichtung des Luftkanals kann zumindest eine sich in Kanallängsrichtung zumindest abschnittsweise erstreckende Linearschiene aufweisen. Insbesondere kann die Linearschiene mittig auf der diese aufweisenden Kanalwand angeordnet sein. Die Linearschiene kann sich über die gesamte Länge des Kanals erstrecken.

Die Befestigungseinrichtung des Luftkanals kann zumindest zwei hinterschnittige Rastabschnitte aufweisen, wobei der Schalldämpfer in Kanallängsrichtung auf die Befestigungseinrichtung aufschiebbar ist. Beispielsweise kann die zumindest eine Linearschiene eine Längsnut aufweisen, in welcher hinterschnittig die beiden Rastabschnitte aufeinander zuweisend ausgebildet sind. Alternativ kann die zumindest eine Linearschiene in Querrichtung an ihren Außenseiten zwei voneinander wegweisen Rastabschnitte aufweisen.

Die Befestigungseinrichtung kann zwei parallele Linearschienen umfassen, von denen jede einen hinterschnittigen Rastabschnitt aufweist. Für ein vereinfachtes Einfädeln des Schalldämpfers können die zwei Linearschienen an den in Längsrichtung liegenden Enden des Kanalstücks eine Aufweitung aufweisen bzw. sich leicht voneinander entfernen. In entsprechender Weise können an den aufgeweiteten Enden ebenfalls die Rastabschnitte aufgeweitet sein.

Die zumindest eine Linearschiene des Luftkanals kann einen sich im Wesentlichen senkrecht von der Kanalwandung weg erstreckenden ersten Abschnitt sowie einen sich daran anschließenden sich im Wesentlichen parallel zur Kanalwandung erstreckenden zweiten Abschnitt aufweisen. Dabei können die hinterschnittigen Rastabschnitte aufeinander zuweisen. Alternativ können die hinterschnittigen Rastabschnitte voneinander wegweisen.

Weitere Eigenschaften, Vorteile und Merkmale der Erfindung sind in der folgenden Beschreibung bevorzugter Ausführungen der Erfindung anhand der beiliegenden Zeichnungen erkennbar, in denen zeigen:
- Fig. 1: eine perspektivische Explosionsansicht einer Ausführungsform des erfindungsgemäßen Schalldämpfers;
- Fig. 2: eine perspektivische Explosionsansicht einer erfindungsgemäßen Haltevorrichtung;
- Fig. 3: eine perspektivische Ansicht eines Montagevorgangs des erfindungsgemäßen Schalldämpfers;
- Fig. 4: eine perspektivische Ansicht eines in einem Luftkanal aufgenommenen erfindungsgemäßen Schalldämpfers.

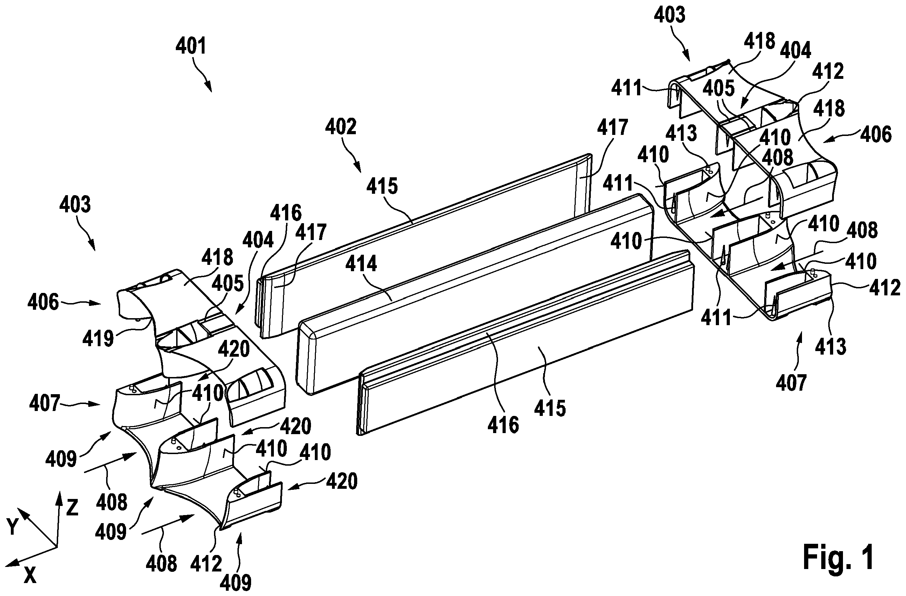

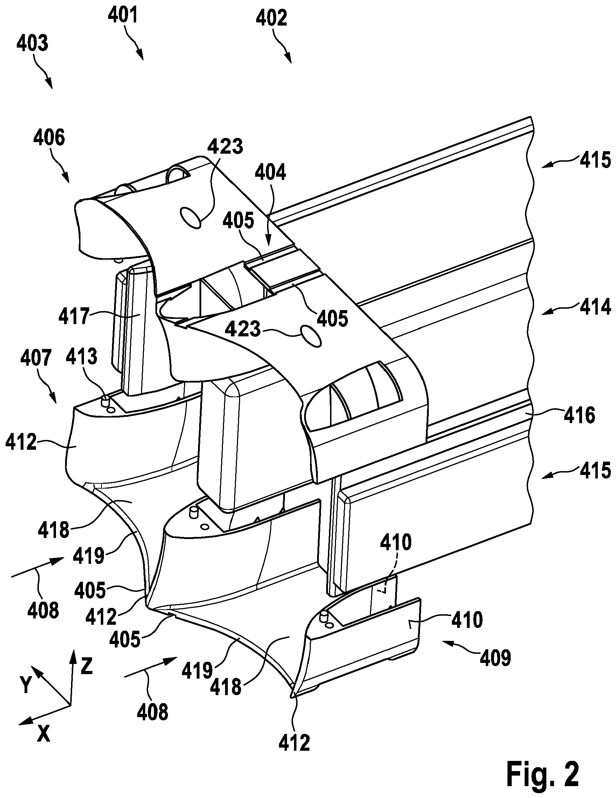

Die Figuren 1 und 2 zeigen eine Ausführungsform des Schalldämpfers 401 mit zwei stirnseitig angeordneten Haltevorrichtungen 403 sowie drei parallele in Querrichtung Y voneinander beabstandeten dazwischen positionierten Dämmelementen 402. Der Schalldämpfer erstreckt sich im Wesentlichen in einer Längsrichtung X. Ferner weist der Schalldämpfer 401 eine Querrichtung Y sowie eine Höhenrichtung Z auf. Im Betrieb ist der Schalldämpfer 401 in einen dessen Abmessungen entsprechenden Luftkanal eingesteckt, wobei abzuführende Abluft, insbesondere eine Dunstabzugshaube, in Längsrichtung X durch den Schalldämpfer 401 strömt. Die Abluft strömt dazu in eine der Haltevorrichtungen 403 ein, durchquert die durch die Dämmelemente 402 begrenzten Freiräume und strömt aus der gegenüberliegenden Haltevorrichtung 403 wieder aus dem Schalldämpfer 401 heraus. Zum Anpassen an unterschiedliche Luftkanalelemente beziehungsweise Einsatzorte innerhalb des Abluftsystems können die Dämmelemente 402 auf die gewünschte Länge zurechtgekürzt werden. Aufgrund voneinander separierter Dämmelemente 402 können innerhalb des Schalldämpfers 401 gleichzeitig unterschiedliche Dämmstoffe zum Einsatz kommen, um die Schalldämpfung individuell an Einbauspezifikationen oder besondere Kundenwünsche anpassen zu können. Die Haltevorrichtungen 403 bestehen jeweils aus einem halbschalenförmigen Oberteil 406 und einem halbschalenförmigen Unterteil 407, wobei diese in zusammengesetztem Zustand eine Außenkontur aufweisen, welche der Innenkontur eines Flachkanals entspricht. Zwischen dem Ober- und dem Unterteil 406,407 sind zwei parallele in Längsrichtung X durchströmbare Luftdurchlässe 408 gebildet, durch welche Luft in den Schalldämpfer ein-bzw. aus diesem ausströmen kann. Zwischen Ober- und dem Unterteil 406,407 sind drei, insbesondere gleichmäßig, beabstandete Stege 409 ausgebildet, welche seitlich durch Luftleitflächen 410 begrenzt werden und rückseitig Dämmelementaufnahmen 420 aufweisen. In der Trennebene zwischen Ober- und Unterteil 406, 407 weisen die Stege 409 jeweils aufeinander zuweisende Oberflächen auf, auf welchen jeweils lösbare Verbindungseinrichtungen 413 angeordnet sind. Dargestellt weist die lösbare Verbindungseinrichtung je Oberfläche jeweils einen Rastpin und eine daneben angeordnetes Rastloch auf. Da das Oberteil und das Unterteil als Gleichteile ausgeführt sind, greifen jeweils die Rastpins in die jeweils gegenüberliegenden Rastlöcher. Frontseitig, das heißt lufteinlassseitig weist der mittlere Steg 409 eine strömungsoptimierte Verjüngung 412 auf, an deren Spitze die seitlichen Luftleitflächen 410zusammentreffen. Die seitlichen Stege 409 weisen ebenfalls Verjüngungen 412 auf, wobei diese eine Spitze aufweisen, welche aus einer dem Luftdurchlass 408 zugewandten Luftleitfläche 410 gebildet ist, welche frontseitig mit der Außenkontur der Haltevorrichtung 403 bzw. der jeweiligen Halbschale 406, 407 zusammentrifft. In zusammengesetztem Zustand fluchten in Höhenrichtung Z die einzelnen gegenüberliegenden Stegelemente wie z.B. die Luftleitflächen 410 miteinander. Über dem mittigen Steg 409 weist die Haltevorrichtung eine Befestigungseinrichtung 404 zum Befestigen des Schalldämpfers in einem Luftkanal 421 auf, welche durch in der Außenkontur der Haltevorrichtung 403 ausgebildete L-förmige Nuten mit seitlich auskragende Führungsrasten 405 realisiert ist. Der Schalldämpfer 401 kann sowohl nur an seiner Ober- bzw. Unterseite als auch sowohl an Ober- und Unterseite entsprechende Befestigungseinrichtungen 404 aufweisen. Figur 2 zeigt darüber hinaus auch Aufdickungen 423, welche auf dem Außenumfang der Haltevorrichtung 403 angeordnet sind und als verschiedenartig ausgeführte lokale Materialanhäufungen realisiert sind. Die Aufdickungen 423 dienen zum Erzeugen einer Klemmverbindung zwischen Luftkanal 421 und Haltevorrichtung 403. Selbstverständlich können neben der dargestellten Ausführungsform ferner Ausführungsformen vorgesehen sein, welche als Befestigungseinrichtung jeweils nur eine der beiden oben beschriebenen Befestigungseinrichtungen aufweist, also entweder L-förmige Nuten mit seitlich auskragende Führungsrasten 405 oder Aufdickungen 423. Bei der Ausführungsform mit Aufdickungen 423 kann ferner insbesondere vorgesehen sein, dass der Luftkanal keine eigene Befestigungseinrichtung aufweist. Die Dämmelemente 402 bestehen aus unterschiedlichen Materialien, wobei dargestellt das mittlere Dämmelement 414 aus einem Material besteht, welches sich von dem der äußeren Dämmelemente 415 unterscheidet. Wie an der hinteren Haltevorrichtung 403 zu erkennen ist, weisen die Dämmelementaufnahmen 420 jeweils in Höhenrichtung Z ausgerichtete Haltezacken 411 auf, mittels welchen das jeweilige Dämmelement 402 in der jeweiligen Dämmelementaufnahme 420 befestigbar ist. Gleichzeitig sind am Außenumfang der Haltevorrichtungen 403 Durchbrüche zu den jeweiligen Dämmelementen 414,415 vorgesehen, durch welche diese von der Außenseite her aus den Haltevorrichtungen herausgedrückt bzw. entfernt werden können, zum Beispiel, wenn nach bestimmter Laufzeit ein Dämmelementwechsel vorzunehmen ist. Insbesondere in Figur 2 ist gut zu erkennen, dass die Haltevorrichtung 403 frontseitig um ihren Außenumfang verteilt in Längsrichtung X zurückgesetzte konkave Einbuchtungen 419 aufweist, welche an den im Wesentlichen in Querrichtung Y verlaufenden, die Lufteinlässe 408 begrenzenden Halbschalenabschnitten 418 angeordnet sind. Ferner ist zu erkennen, dass ebenfalls die Stege 409 in Höhenrichtung Z frontseitig einen konkaven, in Längsrichtung X zurückgesetzten Verlauf aufweisen. Diese in zwei unterschiedlichen Ebenen vorgesehenen konkaven Elemente haben insbesondere den Vorteil, das Strömungsverhalten der einströmenden Luft zu optimieren. Figur 2 zeigt ferner, dass die seitlichen Dämmelemente 415 im Bereich deren zugeordneter Dämmelementaufnahmen 420 einen den Strömungsquerschnitt erweiternden Auslaufbereich 417 aufweisen, welcher der Kontur der zugeordneten Dämmelementaufnahmen 420 angepasst ist. Außerdem zu erkennen sind seitliche Ausnehmungen 416 an den äußeren Ober- und Unterseiten der seitlichen Dämmelemente 415.

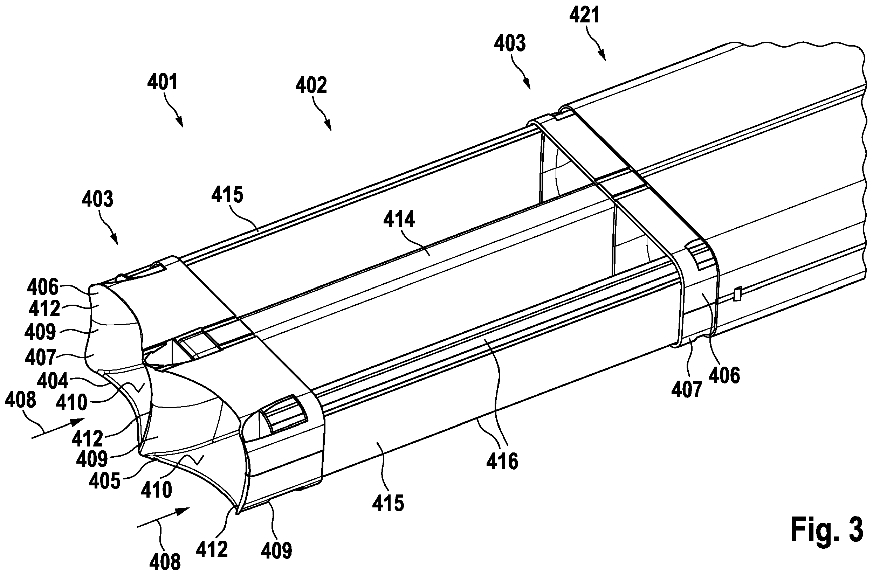

Figur 3 zeigt einen zusammengesetzten Schalldämpfer 401, welcher zur Montage in Längsrichtung X in einen Flachkanal 421 eingeschoben wird. Die Dämmelemente 402 sind in den jeweiligen Dämmelementaufnahmen 420 fixiert, indem diese auf die Haltezacken 411 aufgesteckt wurden und anschließend Ober- und Unterteile 406, 407 der Haltevorrichtungen 403 über die lösbare Verbindungseinrichtung 413 miteinander verclipst wurden. Im zusammengesetzten Zustand werden die Dämmelemente 402 im Bereich der Luftdurchlässe 408 vollkommen von den Luftleitflächen 410 abgeschirmt. Jedem Luftdurchlass 408 ist ein gegenüberliegender Luftdurchlass 408 der gegenüberliegenden Haltevorrichtung fluchtend zugeordnet. Dazwischen wird die durchströmende Luft seitlich von Dämmmatten 414, 415 unterschiedlichen Materials kanalisiert. Zum Einsetzen des Schalldämpfers wird die Befestigungseinrichtung 404 unter einer geringfügigen Vorspannung in die komplementär ausgebildete Befestigungseinrichtung 422 des Flachkanals 421 eingefädelt, so dass der Schalldämpfer mittels leichtem Druck an die gewünschte Position geschoben werden kann.

Die Vorspannung ist so gewählt, dass der Schalldämpfer 401 auch in einem senkrecht ausgerichteten Flachkanal am gewünschten Ort verbleibt.

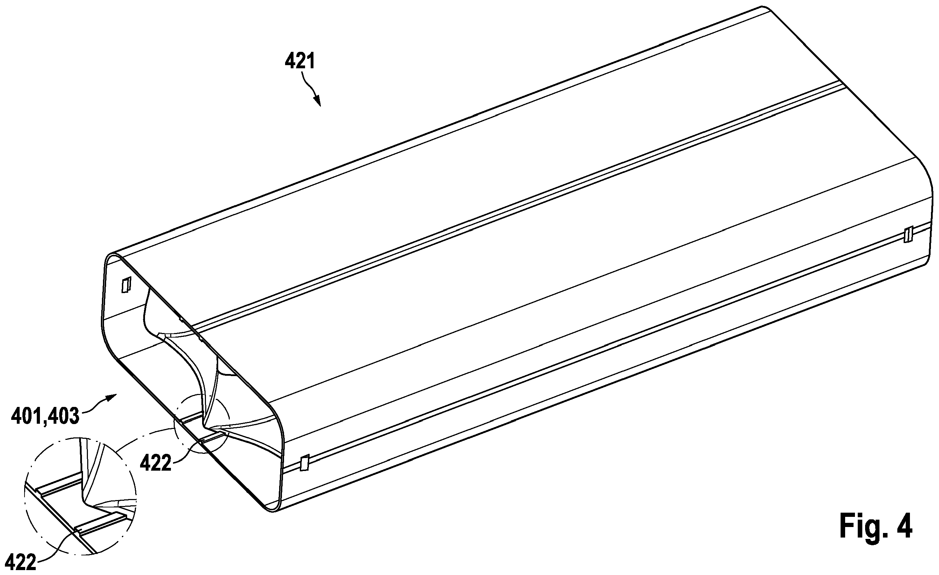

Figur 4 zeig schließlich die Endposition des Schalldämpfers 401 im Flachkanal 421. Die Haltevorrichtung 403 liegt dabei an der Innenkontur des Flachkanals 421 an und stellt damit einen möglichst großen Strömungsquerschnitt bereit, um den durch den Schalldämpfer erzeugten Strömungswiderstand zu minimieren.

Die in der vorstehenden Beschreibung, in den Zeichnungen sowie in den Ansprüchen offenbarten Merkmale der Erfindung können sowohl einzeln als auch in beliebiger Kombination , ohne vom Schutzumfang der Ansprüche abzuweichen, für die Verwirklichung der Erfindung wesentlich sein.

### Bezugszeichenliste

- 401: Schalldämpfer
- 402: Dämmelement
- 403: Haltevorrichtung
- 404: Befestigungseinrichtung Schalldämpfer
- 405: Führungsrasten
- 406: Oberteil
- 407: Unterteil
- 408: Luftdurchlass
- 409: Steg
- 410: Luftleitflächen
- 411: Haltemittel (Zacken)
- 412: Verjüngung
- 413: lösbare Verbindungseinrichtung
- 414: mittleres Schalldämpfelement
- 415: seitliches Schalldämpfelement
- 416: Ausnehmung (Seitenschalldämpfer)
- 417: Auslauf (Seitenschalldämpfer)
- 418: Halbschalenabschnitte
- 419: konkave Einbuchtung
- 420: Dämmelementaufnahme
- 421: Luftkanal
- 422: Befestigungseinrichtung Luftkanal
- 423: Aufdickung
- X: Längsrichtung
- Y: Querrichtung
- Z: Höhenrichtung

## Patentansprüche

1. Schalldämpfer (401) zum Installieren in einem Luftkanal (421), insbesondere in einem Flachkanal, mit zumindest einem sich im Wesentlichen in einer Längsrichtung (X) erstreckenden schallabsorbierenden Dämmelement (402), sowie mit zumindest einer das Dämmelement (402) zumindest abschnittsweise aufnehmenden Haltevorrichtung (403), welche eine Befestigungseinrichtung (404) zum Fixieren des Schalldämpfers (401) im Luftkanal (421) aufweist, **dadurch gekennzeichnet, dass** die Haltevorrichtung (403) zwei, insbesondere in einer Höhenrichtung (Z) des Schalldämpfers (401), lösbar miteinander verbundene Halbschalen (406, 407) aufweist, zwischen welchen das Dämmelement (402) zumindest abschnittsweise aufgenommen und fixiert ist.

2. Schalldämpfer (401) nach Anspruch 1, welcher zumindest zwei Dämmelemente (402) aufweist, welche aus unterschiedlichen schalldämmenden Materialien bestehen, welche zum Dämmen von Schall in unterschiedlichen Frequenzbereichen eingerichtet sind.

3. Schalldämpfer (401) nach Anspruch 1, wobei die Haltevorrichtung (403) zumindest eine an ihrem Außenumfang angeordnete, insbesondere sphärische oder linsenförmige, Aufdickung (423) zum Erzeugen einer definierten Klemmkraft zwischen Schalldämpfer und Luftkanal aufweist.

4. Schalldämpfer (401) nach Anspruch 1 oder 2, wobei die Befestigungseinrichtung (404) zumindest zwei in eine Querrichtung (Y) des Schalldämpfers (401) auskragende hinterschnittige Rastabschnitte (405) aufweist.

5. Schalldämpfer (401) nach Anspruch 4, wobei die hinterschnittigen Rastabschnitte (405) Teil zumindest einer in Längsrichtung (X) auf dem Außenumfang der Haltevorrichtung (403) angeordneten Führungsschiene sind.

6. Schalldämpfer (401) nach einem der vorangehenden Ansprüche, wobei die Außenkontur der miteinander verbundenen Halbschalen (406, 407) dem Strömungsquerschnitt des Luftkanals (421) entspricht.

7. Schalldämpfer (401) nach einem der vorangehenden Ansprüche, wobei die Halbschalen (406,407) zumindest einen in Längsrichtung (X) ausgerichteten Luftdurchlass (408) umschließen.

8. Schalldämpfer (401) nach einem der vorangehenden Ansprüche, wobei zwischen den miteinander verbundenen Halbschalen (406, 407) zumindest ein den Strömungsquerschnitt senkrecht zur Längsrichtung (X) durchquerender Steg (409) ausgebildet ist, welcher eine in Längsrichtung (X), dem Dämmelement (402) zugewandte, offene Dämmelementaufnahme (420) aufweist, in welcher das Dämmelement (402) stirnseitig aufgenommen ist.

9. Schalldämpfer (401) nach Anspruch 8, wobei das Dämmelement (402) sich in der dem Steg (409) entsprechenden Richtung senkrecht zur Längsrichtung (X) durch den Strömungsquerschnitt erstreckt.

10. Schalldämpfer (401) nach Anspruch 8 oder 9, wobei der Steg (409) so in der Haltevorrichtung (403) angeordnet ist, dass dieser den Luftdurchlass (408) mittig unterteilt.

11. Schalldämpfer (401) nach einem der Ansprüche 8 bis 10, wobei in der Dämmelementaufnahme (420) ein Haltemittel (411) zum Halten des Dämmelements (402) vorgesehen ist.

12. Schalldämpfer (401) nach Anspruch 11, wobei das Haltemittel (411) quer zur Längsrichtung (X) ausgerichtete Haltezacken umfasst, auf welche das Dämmelement (402) aufgesteckt ist.

13. Schalldämpfer (401) nach einem der Ansprüche 8 bis 12, wobei die Dämmelementaufnahme (420) das Dämmelement (402) in Längsrichtung (X) umgebende Luftleitflächen (410) aufweist, welche das Dämmelement (402) seitlich von dem zumindest einen Luftdurchlass (408) abschirmen.

14. Schalldämpfer (401) nach Anspruch 13, wobei die Luftleitflächen (410) auf der dem Dämmelement (402) abgewandten Seite des Stegs (409) den Steg (409) in Längsrichtung (X) verjüngend aufeinander treffen.

15. Schalldämpfer (401) nach einem der vorangehenden Ansprüche 4 bis 14, wobei die Haltevorrichtung (403) eine Mehrzahl parallel voneinander beabstandeter Stege (409) aufweist, in welchen eine entsprechende Mehrzahl parallel voneinander beabstandeter Dämmelemente (402) aufgenommen sind.

16. Schalldämpfer (401) nach einem der Ansprüche 8 bis 15, wobei die gegenüberliegenden Stirnseiten des zumindest einen Dämmelements (402) von zwei gegenüberliegenden Haltevorrichtungen (403) gehalten sind, wobei die Dämmelementaufnahmen (420) der Haltevorrichtungen (403) aufeinander zuweisend ausgerichtet sind.

17. Anordnung aus einem Luftkanal (421) und einem Schalldämpfer (401) nach einem der Ansprüche 1 bis 16, wobei der Schalldämpfer (401) mittels der Befestigungseinrichtung (404) im Luftkanal (421) fixiert ist.

18. Anordnung aus einem Luftkanal (421) und einem Schalldämpfer (401) nach Anspruch 17, wobei der Luftkanal (421) eine zur Befestigungseinrichtung (404) des Schalldämpfers (401) komplementäre Befestigungseinrichtung (422) aufweist.

## Claims

1. Silencer (401) for installation in an air duct (421), in particular in a flat duct, with at least one sound-absorbing insulating element (402) extending substantially in a longitudinal direction (X), and with at least one holding device (403) which receives the insulating element (402) at least in sections and which has a fastening device (404) for fixing the silencer (401) in the air duct (421), **characterized in that** the holding device (403) has two half-shells (406, 407) which are detachably connected to one another, in particular in a height direction (Z) of the silencer (401), and between which the insulating element (402) is received and fixed at least in sections.

2. Silencer (401) according to claim 1, which has at least two insulating elements (402) which consist of different sound-absorbing materials which are set up to insulate sound in different frequency ranges.

3. Silencer (401) according to claim 1, wherein the holding device (403) has at least one, in particular spherical or lens-shaped, thickened portion (423) arranged on its outer circumference for generating a defined clamping force between the silencer and the air duct.

4. Silencer (401) according to claim 1 or 2, wherein the fastening device (404) has at least two undercut latching sections (405) which project in a transverse direction (Y) of the silencer (401).

5. Silencer (401) according to claim 4, wherein the undercut latching sections (405) are part of at least one guide rail arranged in the longitudinal direction (X) on the outer circumference of the holding device (403).

6. Silencer (401) according to one of the preceding claims, wherein the outer contour of the half-shells (406, 407) connected to one another corresponds to the flow cross section of the air duct (421).

7. Silencer (401) according to one of the preceding claims, wherein the half-shells (406, 407) enclose at least one air passage (408) oriented in the longitudinal direction (X).

8. Silencer (401) according to one of the preceding claims, wherein at least one web (409) which traverses the flow cross section perpendicularly to the longitudinal direction (X) is formed between the half-shells (406, 407) connected to one another and which has an open insulating element receptacle (420) which faces the insulating element (402) in the longitudinal direction (X) and in which the insulating element (402) is received on the end face.

9. Silencer (401) according to claim 8, wherein the insulating element (402) extends through the flow cross section perpendicularly to the longitudinal direction (X) in the direction corresponding to the web (409).

10. Silencer (401) according to claim 8 or 9, wherein the web (409) is arranged in the holding device (403) such that it divides the air passage (408) centrally.

11. Silencer (401) according to one of claims 8 to 10, wherein a holding means (411) for holding the insulating element (402) is provided in the insulating element receptacle (420).

12. Silencer (401) according to claim 11, wherein the holding means (411) comprises holding teeth which are oriented transversely to the longitudinal direction (X) and onto which the insulating element (402) is plugged.

13. Silencer (401) according to one of claims 8 to 12, wherein the insulating element receptacle (420) has air guide surfaces (410) which surround the insulating element (402) in the longitudinal direction (X) and which shield the insulating element (402) laterally from the at least one air passage (408).

14. Silencer (401) according to claim 13, wherein the air guide surfaces (410) meet the web (409) in a manner tapering in the longitudinal direction (X) on that side of the web (409) which faces away from the insulating element (402).

15. Silencer (401) according to one of preceding claims 4 to 14, wherein the holding device (403) has a plurality of webs (409) which are spaced apart from one another in parallel and in which a corresponding plurality of insulating elements (402) which are spaced apart from one another in parallel are received.

16. Silencer (401) according to one of claims 8 to 15, wherein the opposite end sides of the at least one insulating element (402) are held by two opposite holding devices (403), wherein the insulating element receptacles (420) of the holding devices (403) are oriented so as to face one another.

17. Arrangement comprising an air duct (421) and a silencer (401) according to one of claims 1 to 16, wherein the silencer (401) is fixed in the air duct (421) by means of the fastening device (404).

18. Arrangement comprising an air duct (421) and a silencer (401) according to claim 17, wherein the air duct (421) has a fastening device (422) which is complementary to the fastening device (404) of the silencer (401).

## Revendications

1. Silencieux (401) pour installation dans un conduit d'air (421), notamment dans un câble plat, avec au moins un élément isolant insonorisant (402) s'étendant essentiellement dans une direction longitudinale (X) et avec au moins un dispositif de maintien (403) qui reçoit l'élément isolant (402) au moins par sections, qui présente un dispositif de fixation (404) pour fixer le silencieux (401) dans le conduit d'air (421), **caractérisé en ce que** le dispositif de maintien (403) présente deux demi-coques (406, 407) qui sont reliées l'une à l'autre de manière amovible, en particulier dans une direction en hauteur (Z) du silencieux (401), entre lesquelles l'élément isolant (402) est reçu et fixé au moins par sections.

2. Silencieux (401) selon la revendication 1, qui comporte au moins deux éléments isolants (402) constitués de différents matériaux insonorisants qui sont conçus pour isoler le son dans différentes plages de fréquences.

3. Silencieux (401) selon la revendication 1, le dispositif de maintien (403) présentant au moins un renflement (423), en particulier sphérique ou en forme de lentille, disposé sur sa circonférence extérieure pour générer une force de serrage définie entre le silencieux et le conduit d'air.

4. Silencieux (401) selon la revendication 1 ou 2, le dispositif de fixation (404) comportant au moins deux sections d'arrêt (405) en contre-dépouille faisant saillie dans une direction transversale (Y) du silencieux (401).

5. Silencieux (401) selon la revendication 4, les sections d'arrêt (405) en contre-dépouille faisant partie d'au moins un rail de guidage agencé dans la direction longitudinale (X) sur la circonférence extérieure du dispositif de maintien (403).

6. Silencieux (401) selon l'une des revendications précédentes, le contour extérieur des demi-coques (406, 407) reliées entre elles correspondant à la section d'écoulement du conduit d'air (421).

7. Silencieux (401) selon l'une des revendications précédentes, les demi-coques (406, 407) renfermant au moins un passage d'air (408) aligné dans une direction longitudinale (X).

8. Silencieux (401) selon l'une des revendications précédentes, au moins une nervure (409) qui traverse la section d'écoulement perpendiculairement à la direction longitudinale (X) étant formée entre les demi-coques (406, 407) reliées entre elles, qui présente un logement ouvert d'élément isolant (402) faisant face à l'élément isolant (420) ouvert dans la direction longitudinale (X) et l'élément isolant (402) étant reçu sur le côté avant.

9. Silencieux (401) selon la revendication 8, l'élément isolant (402) s'étendant à travers la section transversale d'écoulement dans la direction correspondant à la nervure (409) perpendiculaire à la direction longitudinale (X).

10. Silencieux (401) selon la revendication 8 ou 9, la nervure (409) étant disposée dans le dispositif de maintien (403) de telle manière qu'elle divise le passage d'air (408) en deux.

11. Silencieux (401) selon l'une des revendications 8 à 10, un moyen de maintien (411) pour maintenir l'élément isolant (402) étant prévu dans le logement d'élément isolant (402).

12. Silencieux (401) selon la revendication 11, le moyen de maintien (411) comprenant des broches de maintien orientées transversalement à la direction longitudinale (X), sur lesquelles est fixé l'élément isolant (402).

13. Silencieux (401) selon l'une des revendications 8 à 12, le logement d'élément isolant (420) présentant des surfaces de guidage d'air (410) entourant l'élément isolant (402) dans la direction longitudinale (X), qui protègent l'élément isolant (402) latéralement d'au moins un passage d'air (408).

14. Silencieux (401) selon la revendication 13, les surfaces de guidage d'air (410) du côté de la nervure (409) opposée à l'élément isolant (402) rencontrant la nervure (409) en se rétrécissant dans la direction longitudinale (X).

15. Silencieux (401) selon l'une des revendications précédentes 4 à 14, le dispositif de maintien (403) présentant une pluralité de nervures (409) parallèles espacées dans lesquelles une pluralité correspondante d'éléments isolants (402) parallèles espacés sont logés.

16. Silencieux (401) selon l'une des revendications 8 à 15, les côtés frontaux opposés du au moins un élément isolant (402) étant maintenus par deux dispositifs de maintien (403) opposés et les logements d'éléments isolants (420) des dispositifs de maintien (403) étant alignés l'un en face de l'autre.

17. Agencement d'un conduit d'air (421) et d'un silencieux (401) selon l'une des revendications 1 à 16, le silencieux (401) étant fixé dans le conduit d'air (421) au moyen du dispositif de fixation (404).

18. Agencement d'un conduit d'air (421) et d'un silencieux (401) selon la revendication 17, le conduit d'air (421) présentant un dispositif de fixation (422) complémentaire au dispositif de fixation (404) du silencieux (401).
